# EUROPEAN PATENT APPLICATION

(11) **EP 1 278 282 A1**
(43) Date of publication of application: **22.01.2003**
(21) Application number: 01810706.0
(22) Date of filing: 16.07.2001
(51) Int. Cl.: H02H 3/253, H02J 3/38

(54) **Method and apparatus for isolating a first section of an electrical grid from a second section of the electrical grid**

(71) Applicant: ABB RESEARCH LTD., 8050 Zürich (CH)
(72) Inventor: Joerg, Pieder, 7013 Domat/Ems (CH)
(74) Representative: ABB Patent Attorneys

(57) **Abstract**

In an apparatus and a method for isolating a first section (1) of an electrical grid from a second section (2) of the electrical grid, an islanding detection means (11) determines whether the first grid section (1) is switched off, and a disconnecting device (13,13',13",12) isolates the first section (1) from the second section (2) of the grid. The islanding detection means (11) is implemented as a part of a substation control system of an electrical substation (10), and the disconnecting device is a circuit breaker (13,13',13") or disconnector (12) of the electrical substation.

As a result, the islanding protection protects the first grid section (1) from islanding operation by separating it from all distributed power generating units (22) connected to the second grid section (2).

## Description

### Field of the Invention

The invention relates to the distribution of electric power, in particular to anti-islanding. It relates to an apparatus and a method for isolating a first section of an electrical grid from a second section of the electrical grid as described in the preamble of claim 1 and 5, respectively.

### Background of the Invention

Distribution of electrical power utilizes a network of utility lines connecting power generators and consumers. The network comprises substations for switching and transforming power, and for monitoring the lines for disturbances. In recent times, electrical utility grids comprise, in addition to large utility power plants that serve as a main source of power, an increasing number of independent and distributed power generating units (DGUs) such as photovoltaic, wind, hydro, diesel, microturbine and other types of power generators. These DGUs usually feed a local load, but may feed excess power into the grid. This leads to safety problems when the main source of power is shut off or disconnected from a section of the grid, leaving one or more DGUs connected to their respective loads and said section of the grid, which is called a generation island. In such a situation, it is possible for the DGUs to continue to supply power to the loads within the island for an indefinite period of time. This condition, called islanding, may lead to difficulties for loads within the island because the DGUs may not be able to maintain proper voltage and frequency at constant and nominal levels. Low voltages or widely fluctuating frequencies may damage motors and other loads. Furthermore, if the section of the grid is disconnected in order for maintenance to be performed, utility personnel may be injured as a result of such power backfeed by a DGU.

In order to prevent islanding, various schemes for detecting a switched off condition of a grid have been proposed. A number of such schemes is described in US 6'219'623 B1, which is herewith incorporated by reference in its entirety. Typically, grid voltages and/or currents are measured by a device associated with a DGU. When an islanding condition is detected, the DGU is disconnected from the grid. If this happens reliably in all DGUs connected to the islanded grid section, then islanding is eliminated and safety of machines and personnel involved is ensured.

Under changing regulatory conditions and with increasing numbers of DGUs, such an arrangement may not be sufficiently safe.

### Description of the Invention

It is therefore an object of the invention to create an apparatus and a method for isolating a first section of an electrical grid from a second section of the electrical grid of the type mentioned initially, which provide an additional degree of safety and flexibility in operating a power grid.

These objects are achieved by an apparatus and a method for isolating a first section of an electrical grid from a second section of the electrical grid according to the claims 1 and 5.

According to the invention, in which an islanding detection means determines whether the first grid section is switched off, and a disconnecting device isolates the first section from the second section of the grid, the islanding detection means is implemented as a part of a substation control system of an electrical substation, and the disconnecting device is a circuit breaker or disconnector of the electrical substation.

As a result, the islanding protection functionality is not associated with just one DGU, but protects the first grid section from islanding operation by separating it from all DGUs connected to the second grid section. Even if islanding protection fails in one or more DGUs, they cannot feed any power back into the first grid section.

A further advantage is that the invention may be realized in existing substations where most of the hardware components such as switches, measurement devices and control devices usually already exist and must only be functionally connected and programmed in order to carry out the invention.

Further preferred embodiments are evident from the dependent patent claims.

### Brief Description of the Drawings

The subject matter of the invention will be explained in more detail in the following text with reference to preferred exemplary embodiments which are illustrated in the attached drawings, in which:
- Figure 1: schematically shows a structure of part of an electrical grid, including a substation; and
- Figure 2: schematically shows a structure of a medium voltage section of a grid.

The reference symbols used in the drawings, and their meanings, are listed in summary form in the list of reference symbols. In principle, identical parts are provided with the same reference symbols in the figures.

### Detailed Description of Preferred Embodiments

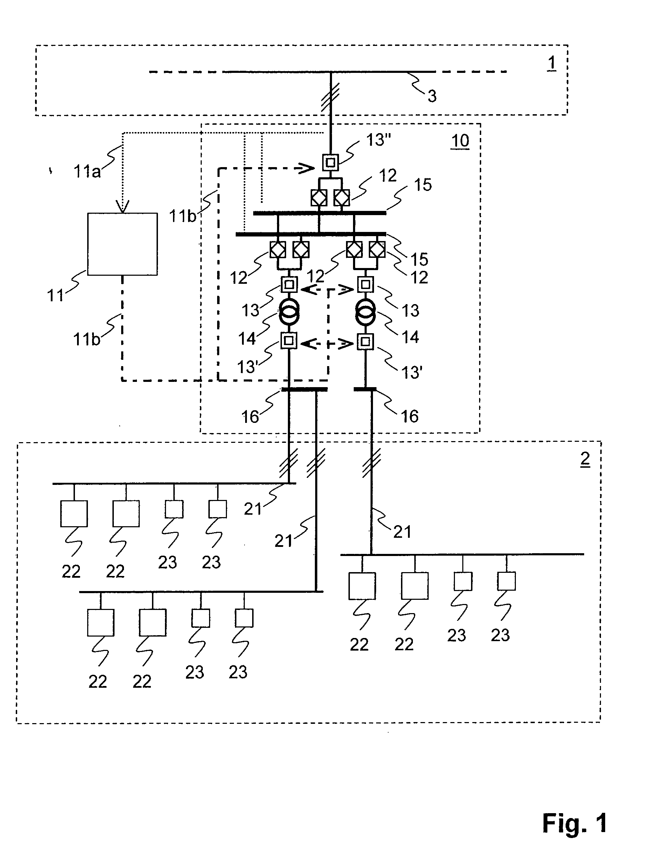

Figure 1 schematically shows a structure of part of an electrical grid comprising a medium voltage section 1 or first section of the electrical grid, a low voltage section 2 or second section of the electrical grid, and a substation 10. The medium voltage section 1 comprises a three phase medium voltage distribution line 3 connected to the substation 10. The low voltage section 2 comprises typically three-phase low voltage lines or outlets 21 connecting the substation 10 to loads 23 and distributed power generating units (DGUs) 22. The low voltage lines 21 are connected to low voltage busbars 16 which in turn are connected via secondary circuit breakers 13', transformers 14, primary circuit breakers 13 and disconnectors 12 to medium voltage busbars 15. The medium voltage busbars 15 are connected via disconnectors 12 and medium voltage circuit breakers 13" to the medium voltage distribution line 3.

An islanding detection means 11 is arranged to measure measurement values 11a comprising a voltage at and/or a current from the medium voltage distribution line 3 and/or a medium voltage busbar 15. The islanding detection means 11 is further arranged to issue switching commands 11b to at least one disconnecting device such as a primary circuit breaker 13, secondary circuit breaker 13' or the medium voltage circuit breaker 13". Said circuit breakers 13,13',13" serve as disconnection devices, possibly in combination with one or more of the disconnectors 12.

The invention functions as follows: During normal operation, power may flow through the substation 10 from the medium voltage section 1 to the low voltage section 2 as well as from the low voltage section 2 to the medium voltage section 1. In the event that the first grid section is switched off, i.e. that it is disconnected from a main source of power and is not powered by a utility anymore, the measurement values 11a change accordingly and the islanding detection means 11 detects that the first grid section is switched off. In this event, the islanding detection means 11 issues one or more switching commands 11b to one or more disconnecting devices 13,13',13", causing them to open and so to electrically disconnect the medium voltage section 1 from the low voltage section 2. The switching of the circuit breaker 13,13',13''' is preferably effected through the substation distributed control system.

In principle, the primary circuit breakers 13 or the secondary circuit breakers 13' or the medium voltage circuit breakers 13" may be used to disconnect the medium voltage section 1 from the low voltage section 2. In a preferred embodiment of the invention, the secondary circuit breakers 13' that connect the low-voltage side of the transformers 14 to associated low voltage lines 21 are used. In another preferred embodiment of the invention, the primary circuit breakers 13 that connect the medium-voltage side of the transformers 14 to the medium voltage busbars 15 are used. In both preferred embodiments, opening the respective primary or secondary circuit breakers 13,13' prevents power from flowing from one low voltage line 21 to the medium voltage busbars 15 and from there into another low voltage line 21. This improves safety with regard to the low voltage lines 21.

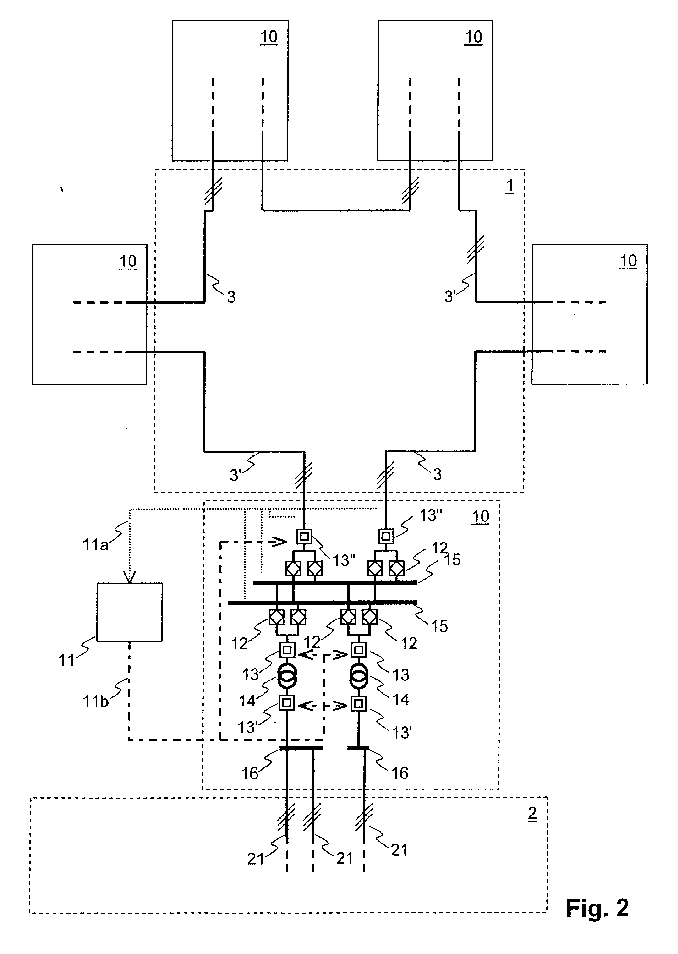

Figure 2 shows a structure of a medium voltage section 1 of a grid, in which a plurality of medium voltage distribution lines 3,3' connect a plurality of substations 10 in a ring configuration. At each substation 10, a first and second medium voltage distribution line 3,3' are connected to medium voltage busbars 15 by associated medium voltage circuit breakers 13" and disconnectors 12. At least one substation 10 is configured to feed power generated at a utility power plant and transmitted via a high-voltage grid to the medium voltage section 1.

When the medium voltage section 1 is shut off, none of the medium voltage distribution lines 3,3' should carry any voltage or power. Which measurements should be considered in determining whether the medium voltage section 1 is shut off depends on whether the medium voltage distribution lines 3,3' are connected to the medium voltage busbars 15. If, for example, either the first medium voltage distribution line 3 or the second medium voltage distribution line 3' are disconnected from the medium voltage busbars 15, no power can be fed back into the disconnected line, and so its state does not matter and is ignored. If both the first and second medium voltage distribution line 3,3' are electrically connected to the medium voltage busbar 15, then measurements at the connection to either of the medium voltage distribution lines 3,3' as well as measurements at the medium voltage busbars 15 provide essentially the same information about the state of the medium voltage section 1.

Therefore, in a preferred embodiment of the invention, existing measuring means at the connections to the medium voltage distribution lines 3,3' are used, and results are taken into account depending on whether the associated connections are open or closed. To do this, the substation has only to determine, to which medium voltage distribution line 3,3' it is connected to and evaluate the respective current and voltage measurements.

The islanding detection means 11 operates, for example, by one of the schemes explained in US 6'219'623 B1, including the background art section.

Other anti-islanding approaches introduce a tendency to drift in the controllers of the DGUs 22. As long as the utility is present, the DGUs 22 synchronize themselves according to the voltage signal from the utility. When the utility signal disappears because the utility is disconnected, then the even if a DGU 22 manages to maintain the voltage, its frequency shall drift until this drift is detected by the islanding detection means 11 at the substation 10 on either the medium voltage or the low voltage side. This also happens when one or more rotating generators are connected to a substation, since they usually have an inherent tendency to drift..

In a preferred embodiment of the invention, the islanding detection means 11 simply calculates, from voltage measurements at the medium voltage level, the RMS voltage and the frequency of the medium voltage section 1. If one or both of these values exceed a prescribed upper or lower limit, then it is determined that the medium voltage section 1 is switched off. If this happens, then all the connections to the low voltage section 2 are opened, i.e. disconnected.

Modern DGUs with power electronic inverters do not necessarily exhibit frequency or voltage run-away. To protect the grid also from these units, in a further preferred embodiment of the invention more sophisticated methpds such as identification and monitoring of the grid impedance are implemented using the voltage as well as the current sensors in the substation. In the simplest case, a sharp increase in grid impedance indicates islanding condition. For classical protection such as from short-circuit or from overload, the substation already has grid impedance history information stored in its control system, which it can compare to the observed grid impedance. This increases the reliability of islanding detection.

The operation of the islanding detection means 11 is coordinated with the operation of the substation 10. For example, when no medium voltage distribution line 3 and/or no low voltage line 21 is able to feed power to the busbars, since corresponding circuit breakers 13,13',13" and/or disconnectors 12 are open, then operation of the islanding detection means 11 and/or its switching commands 11b is disabled.

The apparatus according to the invention is an anti-islanding apparatus in the sense that it prevents power from the low voltage section 2 from being fed into the medium voltage section 1, and in that it separates power flow from the DGUs 22 to the medium voltage section 1. In a preferred embodiment of the invention, the apparatus however does not directly cause any DGUs 22 to be shut down or to disconnected from the low voltage section 2. Rather, the DGUs 22 are disconnected by local anti-islanding devices associated with each of the DGUs 22, based on observations of the current and voltage at the low voltage section, as is well known in the state of the art and described in US 6'219'623 B1. In cases where the DGUs 22 cannot control or seriously impact the voltage and frequency of the low voltage section 2, the local anti-islanding device is a voltage or frequency relay that disconnects the DGU 22 from the low voltage section 2 when the voltage or frequency exceeds given bounds.

The invention is preferably implemented in a so-called secondary substation 10, i.e. a substation 10 transforming power from the medium voltage to the low voltage level. The low voltage grid section 2 typically has an nominal voltage of 110 to 380 Volt and is usually connected to DGUs 22 and customer loads 23 without further voltage transformation.

A resulting advantage of the invention from the utility and network operators point of view is that an important part of islanding prevention is under control of the network operator and does not depend on the correct functioning of a large and increasing number of DGUs 22 and their respective anti-islanding devices.

One may differentiate between a grid having been switched off on purpose, and failures. A grid or grid section having been switched off means that it is disconnected from one or more main power sources such as utility power generating plants. Failures or contingencies may be line failures such as ground failures, short circuits, overvoltages due to lightning etc. Failures are detected by traditional means and usually cause a section of a line to be disconnected temporarily or permanently, depending on the nature of the failure. Such a disconnected line may in turn isolate a grid section from a utility generator and cause it to become an island, which then in turn causes the need for anti-islanding measures as addressed by the invention.

An electrical substation 10 according to the invention incorporates an islanding detection means 11 for determining whether the first grid section 1 is switched off, at least one disconnecting device 13,13',13" such as a circuit breaker or disconnector for electrically disconnecting the first section 1 from the second section 2 of the electrical grid when said islanding detection means 11 detects that the first grid section 1 is switched off. The islanding detection means 11 is implemented as a part of a substation control system of the substation 10.

### List of designations

- 1: first section of an electrical grid, medium voltage section
- 2: second section of the electrical grid, low voltage section
- 3: first medium voltage distribution line
- 3': second medium voltage distribution line
- 10: electric substation
- 11: islanding detection means
- 11a: measurement values
- 11b: switching commands
- 12: disconnector
- 13: primary circuit breaker
- 13': secondary circuit breaker
- 13": medium voltage circuit breaker
- 14: transformer
- 15: medium voltage busbar
- 16: low voltage busbar
- 21: low voltage line
- 22: distributed power generating unit, DGU
- 23: load

## Claims

1. An apparatus for isolating a first section of an electrical grid (1) from a second section of the electrical grid (2), comprising
an islanding detection means (11) for determining whether the first grid section (1) is switched off, and
at least one disconnecting device (13,13',13") for electrically disconnecting the first section (1) from the second section (2) of the electrical grid when said islanding detection means (11) detects that the first grid section (1) is switched off, **characterized in**
**that** the islanding detection means (11) is implemented as a part of a substation control system of an electrical substation (10), and
**that** the at least one disconnecting device (13,13',13") is a circuit breaker or disconnector of the electrical substation (10).

2. An apparatus according to claim 1, **characterized in that** the islanding detection means (11) is arranged to determine whether the first grid section (1) is switched off based on measurement values (11a) comprising at least one of a voltage at and a current from at least one power line (3,3') of the first grid section (1).

3. An apparatus according to claim 1 or 2, **characterized in that** the at least one disconnecting device (13,13') is arranged to prevent power flow between an associated power line (21) of the second section (2) and a medium voltage busbar (15).

4. An apparatus according to claim 1 or 2, **characterized in that** the at least one disconnecting device (13') is arranged to disconnect an associated power line (21) of the second section (2) from a power transformer (14).

5. A method for isolating a first section of an electrical grid (1) from a second section (2) of the electrical grid, **characterized in that** the first (1) and second (2) section are connected by an electrical substation (10) and **in that** the method comprises
a) determining, by means of an islanding detection means (11) which is implemented as a part of a substation control system of an electrical substation (10), whether the first grid section (1) is switched off,
b) electrically disconnecting, by means of at least one disconnecting device (13,13',13") which is a circuit breaker or disconnector of the electrical substation (10), the first section (1) from the second section (2) of the electrical grid when the first grid section (1) is determined to be switched off.

6. A method according to claim 5, **characterized in that** the step of determining whether the first grid section (1) is switched off comprises measuring, in the substation (10), measurement values (11a) of at least one of a voltage at or a current from the first section (1) of the electrical grid, and calculating from said measurement values (11a) whether the first grid section (1) is switched off.

7. A method according to claim 5, **characterized in that** the step of electrically disconnecting the first section from the second section of the grid is achieved by opening a disconnecting device (13,13') that is located at the substation and is arranged to prevent power flow between an associated power line (21) of the second section (2) and a medium voltage busbar (15) of the substation (10).

8. A method according to claim 5, **characterized in that** the step of electrically disconnecting the first section from the second section of the grid is achieved by opening at least one disconnecting device (13') that is located at the substation and is arranged to disconnect an associated power line (21) of the second section (2) from a power transformer (14) of the substation (10).
